# EUROPÄISCHE PATENTANMELDUNG

(11) **EP 4 134 779 A1**
(43) Veröffentlichungstag der Anmeldung: **15.02.2023**
(21) Anmeldenummer: 22188318.4
(22) Anmeldetag: 02.08.2022
(51) Int. Cl.: G05G 5/03, G05G 9/047

(54) **STEUERVORRICHTUNG**

(30) Priorität: 09.08.2021 DE 102021120686
(71) Anmelder: GRAMMER AG, 92289 Ursensollen (DE)
(72) Erfinder: Brouwers, Bert, 9100 Sint-Niklaas (BE); De Boeck, Peter, 2000 Antwerpen (BE); Ponomarev, Mikhail, 2000 Antwerpen (BE); Sujith Kumar, Kruthik Kumar, 2800 Mechelen (BE)
(74) Vertreter: Hannke, Christian

(57) **Zusammenfassung**

Steuervorrichtung zum Bedienen mindestens eines Aktors eines Fahrzeugs, wobei die Steuervorrichtung einen auslenkbaren Steuerhebel und ein Gehäusemodul umfasst, wobei ein um eine erste Drehachse drehbares erstes Führungselement und ein um eine zweite Drehachse drehbares zweites Führungselement vorgesehen sind, wobei das erste Führungselement an einem ersten Ende des Steuerhebels angeordnet ist und das zweite Führungselement zwischen dem ersten Ende und einem zweiten Ende des Steuerhebels angeordnet ist, wobei das Gehäusemodul Durchgangsöffnungen aufweist, welche als Lagerstellen zum Lagern der Führungselemente ausgebildet sind, so dass die Führungselemente von außerhalb des Gehäusemoduls kontaktierbar sind, wobei das Gehäusemodul auf einer Außenseite einen ersten Kupplungsbereich aufweist, wobei der erste Kupplungsbereich eine Lagerstelle der Lagerstellen umfasst und der erste Kupplungsbereich dazu ausgebildet und vorgesehen ist, ein Zusatzmodul, welches einen zumindest teilweise komplementär zu der dem ersten Kupplungsbereich ausgebildeten Bereich umfasst, derart aufzunehmen, dass das Zusatzmodul funktional mit dem Führungselement verbindbar ist.

## Beschreibung

Die Erfindung betrifft eine Steuervorrichtung, bevorzugt eine manuell bedienbare Steuervorrichtung, zum Bedienen mindestens eines Aktors eines Fahrzeugs.

Fahrzeuge, die mit mehreren Aktoren oder Aktorelementen ausgestattet sind, verfügen herkömmlicherweise über ein Steuersystem und Steuerelemente zur Ansteuerung dieser Aktorelemente. Beispiele für solche Fahrzeuge sind etwa ein Gabelstapler, ein Traktor oder auch ein Bagger. Beispiele für solche Aktorelemente sind Antriebe, welche beispielsweise hydraulisch, pneumatisch, elektronisch und/oder elektromechanisch ausgestaltet und für die Bewegung von Baggerschaufeln oder auch ansteuerbaren Ventilen vorgesehen sind. Teil des Steuersystems ist meist ein elektronisches Kontrollgerät, welches Signale von Sensoren empfängt und Steuersignale an die Aktorelemente weitergibt.

Steuerelemente zur aktiven Ansteuerung von Aktorelementen sind aus dem Stand der Technik als sogenannte Joysticks, Steuerknüppel oder auch Steuerhebelelemente bekannt, welche einem Gangschalthebel aus dem PKW ähneln und durch den Benutzer des Fahrzeugs (Fahrzeugführer) manuell bedienbar innerhalb der Fahrzeugkabine angeordnet sind. Diese Steuerhebelelemente sind, beispielsweise durch die Muskelkraft des Fahrers, von einer Ausgangsstellung (Grundstellung/-position, Neutralstellung) nach links, rechts, vorne und/oder hinten verlagerbar (verschwenkbar und/oder verschiebbar) angeordnet.

Dadurch, dass der verfügbare Platz zum Anordnen in der Regel sehr begrenzt verfügbar ist, sind die Steuersysteme des Standes der Technik äußerst kompakt gebaut, um möglichst platzsparend ausgestaltet werden zu können. Dies wird beispielsweise dadurch erreicht, dass verschiedene Elemente des Steuersystems zur Platzreduzierung überlappend angeordnet sind, das heißt, dass die Elemente ineinander verbaut sind, funktional aber voneinander getrennt sein können.

Bei einer Fehlfunktion eines derartigen Steuersystems ist daher die Folge, dass das ganze Steuersystem ausgebaut und ersetzt werden muss. Ebenso kann das Steuersystem nicht einfach an verschiedene Anforderungen an das Fahrzeug angepasst werden.

Die Aufgabe der vorliegenden Erfindung ist es, die Nachteile des Standes der Technik zu überkommen, so dass, bei ebenfalls geringem Platzbedarf, eine leichte und schnelle Anpassung des Steuersystems möglich ist und fehlerhafte Komponenten schnell austauschbar sind.

Die Aufgabe der Erfindung wird gelöst von einer Steuervorrichtung mit den Merkmalen des unabhängigen Anspruches 1.

Kerngedanke der Erfindung ist es, eine Steuervorrichtung zum Bedienen mindestens eines Aktors eines Fahrzeugs bereitzustellen, wobei die Steuervorrichtung einen auslenkbaren Steuerhebel und ein Gehäusemodul umfasst, wobei ein um eine erste Drehachse drehbares erstes Führungselement und ein um eine zweite Drehachse drehbares zweites Führungselement vorgesehen sind, wobei das erste Führungselement an einem ersten Ende des Steuerhebels angeordnet ist und das zweite Führungselement zwischen dem ersten Ende und einem zweiten Ende des Steuerhebels angeordnet ist, wobei das Gehäusemodul Durchgangsöffnungen aufweist, welche als Lagerstellen zum Lagern der Führungselemente ausgebildet sind, so dass die Führungselemente von außerhalb des Gehäusemoduls kontaktierbar sind, wobei das Gehäusemodul auf einer Außenseite einen ersten Kupplungsbereich aufweist, wobei der erste Kupplungsbereich eine Lagerstelle der Lagerstellen umfasst und der erste Kupplungsbereich dazu ausgebildet und vorgesehen ist, ein Zusatzmodul, welches einen zumindest teilweise komplementär zu der dem ersten Kupplungsbereich ausgebildeten Bereich umfasst, derart aufzunehmen, dass das Zusatzmodul funktional mit dem Führungselement verbindbar ist.

Bevorzugt kann der Steuerhebel aus einer Grundposition ausgelenkt werden. Dabei ist es denkbar, dass der Steuerhebel mittels einer Drehung um die erste Drehachse und/oder die zweite Drehachse auslenkbar ist. Als eine Grundposition kann beispielsweise definiert werden, dass eine Erstreckungsrichtung des Steuerhebels senkrecht zu der ersten Drehachse und senkrecht zu der zweiten Drehachse angeordnet ist.

Gemäß einer besonders bevorzugten Ausführungsform sind die erste Drehachse und die zweite Drehachse senkrecht zueinander, wobei bevorzugt die erste Drehachse und die zweite Drehachse stets senkrecht zueinander sind, das heißt, dass unabhängig von einer Auslenkung des Steuerhebels die Achsen senkrecht zueinander sind.

Der Steuerhebel ist ausgehend von der Grundposition bevorzugt in alle Richtungen auslenkbar. Das Steuerhebel kann also bevorzugt eine Auslenkung um die erste Achse und/ oder eine Auslenkung um die zweite Achse erfahren, und zwar sowohl hinsichtlich einer positiven (entspricht einer Drehung nach vorne) als auch einer negativen Drehung (entspricht einer Drehung nach hinten) um die jeweilige Achse. Ferner ist bevorzugt eine Superposition der beschriebenen Auslenkungen möglich. Weiter bevorzugt sind alle genannten Verlagerungsbewegungen stufenlos möglich.

Das Gehäusemodul ist bevorzugt würfelförmig oder quaderförmig ausgebildet. Bevorzugt weist das Gehäusemodul zumindest vier Seitenwände auf, wobei jede der Seiten eine, bevorzugt genau eine, Durchgangsöffnung aufweist. Weiter bevorzugt sind jeweils zwei Seitenwände parallel zueinander angeordnet, wobei bevorzugt zwei Seitenwände parallel zu der ersten Drehachse und zwei Seitenwände parallel zu der zweiten Drehachse ausgebildet sind.

Bevorzugt bilden das erste Führungselement und das zweite Führungselement ein Kardangelenk aus.

Erfindungsgemäß ist es vorgesehen, dass an dem ersten Ende des Steuerhebels das erste Führungselement angeordnet ist, welches um die erste Drehachse drehbar gelagert ist und eine erste Führungskulisse ausbildet, mittels welcher die Drehung des Steuerhebelelements um die erste Drehachse auf einen bestimmten ersten Winkelbereich begrenzbar ist.

Außerdem ist es vorteilhaft, wenn das erste Führungselement eine Lagerstelle für eine Drehlagerung des ersten Endes des Steuerhebels ausbildet. Beispielsweise weist das erste Führungselement eine durch die Führungskulisse durchgehende Bohrung auf. Beispielsweise weist das erste Ende des Steuerhebels ebenfalls eine Bohrung auf. Bevorzugt sind beide Bohrungen fluchtend zueinander angeordnet, wobei innerhalb der beiden Bohrungen ein Stabelement angeordnet ist, um welchen der Steuerhebel drehbar angeordnet ist und welcher mit dem ersten Führungselement bevorzugt starr verbunden ist. Es ist also mittels des ersten Führungselements und des Stabelements beispielsweise eine Drehlagerung des Steuerhebels ausgebildet, was den Platzbedarf der Steuervorrichtung weiter reduziert.

Außerdem ist es vorgesehen, dass zwischen dem ersten Ende des Steuerhebels und dem zweiten Ende des Steuerhebels das zweites Führungselement angeordnet ist, welches um die zweite Drehachse drehbar gelagert ist und eine zweite Führungskulisse ausbildet, mittels welcher die Drehung des Steuerhebels um die zweite Drehachse auf einen bestimmten zweiten Winkelbereich begrenzbar ist.

Bevorzugt ist das zweite Führungselement so angeordnet, dass es in Höhenrichtung der Steuervorrichtung das erste Führungselement zumindest teilweise überlappt. Beispielsweise bildet das zweite Führungselement zumindest abschnittsweise eine Bogenform aus, wobei eine virtuelle Mittelachse des dazugehörigen Bogens parallel zur zweiten Achse und/oder das erste Führungselement schneidend angeordnet ist. Diese Anordnung reduziert den erforderlichen Bauraum ebenfalls.

Erfindungsgemäß sind die Führungselemente mittels Lagerstellen des Gehäusemoduls gelagert, wobei jeweils eine erste und eine zweite Lagerstelle vorgesehen sind. Beispielsweise umfasst die erste und/oder die zweite Lagerstelle eine Wälzlagerverbindung.

Erfindungsgemäß bilden Durchgangsöffnungen des Gehäusemoduls Lagerstellen zum Lagern der Führungselement aus. Dadurch, dass die Lagerstellen Durchgangsöffnungen des Gehäusemoduls sind, können die Führungselement von außerhalb des Gehäusemoduls kontaktiert werden, erfindungsgemäß mit einem Zusatzmodul.

Dabei ist es erfindungsgemäß weiter vorgesehen, dass ein erster Kupplungsbereich vorgesehen ist, welcher eine Lagerstelle der Lagerstellen umfasst, bevorzugt genau eine Lagerstelle umfasst. Der erste Kupplungsbereich ist dazu ausgebildet und vorgesehen, das Zusatzmodul zumindest teilweise aufzunehmen, wobei das Zusatzmodul zumindest teilweise komplementär zu dem ersten Kupplungsbereich ausgebildet ist. Das Zusatzmodul ist erfindungsgemäß mit dem Führungselement funktional verbindbar, das heißt, dass das Zusatzmodul auf das entsprechende Führungselement wirken kann, insbesondere direkt wirken kann.

Besonders bevorzugt ist es vorgesehen, dass ein erster Kupplungsbereich und ein zweiter Kupplungsbereich vorgesehen sind, wobei der erste Kupplungsbereich und der zweite Kupplungsbereich die Lagerstellen des ersten Führungselements oder des zweiten Führungselements umfasst.

Besonders bevorzugt ist es vorgesehen, dass ein erster Kupplungsbereich, ein zweiter Kupplungsbereich, ein dritter Kupplungsbereich und ein vierter Kupplungsbereich vorgesehen sind, wobei der erste Kupplungsbereich und der zweite Kupplungsbereich die Lagerstellen des ersten Führungselements und der dritte Kupplungsbereich und der vierte Kupplungsbereich die Lagerstellen des zweiten Führungselements umfasst.

Unabhängig von der Anzahl der Kupplungsbereich kann jeder Kupplungsbereich ein Zusatzmodul aufnehmen.

Gemäß einer besonders bevorzugten Ausführungsform ist es vorgesehen, dass das Zusatzmodul eines ist ausgewählt aus einem Aktormodul und einem Rückstellmodul, wobei das Aktormodul dazu ausgebildet ist, eine der Drehachsen mit einem Drehmoment zu beaufschlagen, und wobei das Rückstellmodul dazu ausgebildet ist, eine der Drehachsen mit einer Kraft zu beaufschlagen, um einer Auslenkung des Steuerhebels entgegenzuwirken.

Mittels eines Aktormoduls ist es möglich, den Steuerhebel indirekt, nämlich über die Ansteuerung einer Drehachse beziehungsweise eines Führungselements, aktiv anzusteuern und/oder programmiert anzusteuern, das heißt, dass ohne Einwirken der Muskelkraft des Fahrers eine Kraft oder ein Moment auf das Steuerhebelelement applizierbar ist. Diese Technik ist auch als "Force Feedback" bekannt.

Es kann also mittels des Aktormoduls eine Kraft und/oder ein Moment auf den Steuerhebel übertragen werden, welche sich beispielsweise als Vibration und/oder Verlagerung des Steuerhebels auswirkt. Eine Vibration kann eine zeitliche Abfolge von kleinen Verlagerungen sein.

Mittels des Aktormoduls kann ein Moment einerseits in Drehrichtung oder entgegen der Drehrichtung beaufschlagt werden, so dass dieses Moment unterstützend oder der Bewegung entgegenwirken kann.

Besonders bevorzugt kann mittels eines Aktormoduls der Steuerhebel hinsichtlich einer Drehung um eine Drehachse oder um beide Drehachsen blockiert werden.

Gemäß einer bevorzugten Ausführungsform ist es vorgesehen, dass das Aktormodul eine Antriebseinheit und eine Abtriebseinheit umfasst. Weiter bevorzugt bildet das Aktormodul eine Motor-Getriebe-Kombination aus. Besonders bevorzugt sind die Abtriebseinheit durch ein Planetengetriebe und die Antriebseinheit als ein Elektromotor ausgestaltet.

Der Elektromotor ist bevorzugt ein Torquemotor, so dass ein hohes Drehmoment bei kleinen Drehzahlen erreicht werden kann.

Es ist zur Unterstützung der kompakten Bauweise der Steuervorrichtung vorteilhaft, wenn das mittels Planetengetriebe ein drehbar gelagertes Sonnenrad, ein das Sonnenrad radial umgebendes Hohlrad sowie mehrere, bevorzugt drei radial zwischen dem Sonnenrad und dem Hohlrad angeordnete und damit verzahnte Planetenräder umfassen. Bevorzugt ist das Sonnenrad jeweils fluchtend zu einer der Drehachsen angeordnet und um diese drehbar gelagert.

Beispielsweise weist das Modul des Sonnenrads, des Hohlrads und der Planetenräder, also das Verhältnis der Werte des jeweiligen Teilkreisdurchmessers und der jeweiligen Zähnezahl, jeweils einen identischen Wert aus einem Bereich von 0,3 mm bis 0,7 mm, bevorzugt 0,5 mm, auf.

Bevorzugt ist das Hohlrad feststehend gelagert; der Abtrieb erfolgt also bevorzugt nicht über das Hohlrad. Beispielsweise weist das Hohlrad eine Verdrehsicherung auf, mittels welcher seine radiale Position gegenüber einem Rest des Aktormoduls fixierbar ist. Beispielsweise ist diese Verdrehsicherung zum einen mittels einer speziellen ersten Geometrie des Hohlrads an seinem Außendurchmesser ausgebildet. Beispielsweise ist diese erste Geometrie als mindestens eine, bevorzugt vier Abflachungen des äußeren Radius' des Hohlrads ausgestaltet. Bevorzugt ist diese Verdrehsicherung zum anderen als eine zur ersten Geometrie komplementär ausgestaltete zweite Geometrie am Rest des Aktormoduls ausgestaltet; beispielsweise sind ebenfalls Abflachungen an einem Innenradius am Rest des Aktormoduls ausgebildet, deren Anzahl und Anordnung bevorzugt identisch zur Anzahl der Abflachungen des Hohlrads ausgebildet ist.

Bevorzugt erfolgt der Antrieb über eine Welle des Elektromotors bzw. Motors (Motorwelle) und über das Sonnenrad, wobei eine Mittelachse der Welle des Elektromotors bevorzugt mit einer Mittelachse des Sonnenrads fluchtet. Weiter bevorzugt steht die Welle des Motors mit dem Sonnenrad im mechanischen Eingriff, so dass ein Drehmoment des Motors auf das Sonnenrad übertragbar ist; bevorzugt sind die Welle und das Sonnenrad starr miteinander verbunden. Somit ist insbesondere eine Drehung der Motorachse in eine gleichgerichtete und hinsichtlich der Drehzahl identische Drehung des Sonnenrads übertragbar. Beispielsweise umfasst eine Verbindung zwischen der Motorwelle und dem Sonnenrad eine Passfederverbindung.

Bevorzugt ist es jedoch, wenn zwischen der Motorwelle und dem Sonnenrad keine separate Verbindung notwendig ist. Demnach sind die Motorwelle und das Sonnenrad bevorzugt einstückig ausgestaltet; beispielsweise sind die Motorwelle und das Sonnenrad aus einem einzigen Teil und/oder einem einzigen Halbzeug gefertigt und bevorzugt spanend gefertigt ("gefräst").

Beispielsweise ist mindestens eines oder mehrere, bevorzugt alle Zahnräder (Sonnenrad, Hohlrad und/oder Planetenräder) aus Kunststoff gefertigt. Mögliche Kunststoffe sind hier beispielsweise Polyacetal (POM) und/oder Polyketon (PK).

Gemäß einer weiteren bevorzugten Ausführungsform ist es vorgesehen, dass das Aktormodul ein Aktormodulgehäuse umfasst, wobei das Aktormodulgehäuse aus einem ersten Aktormodulgehäuseteil, welches mit dem Gehäusemodul verbindbar ist, und einem zweiten Aktormodulgehäuseteil ausgebildet ist, wobei die Abtriebseinheit innerhalb des Aktormodulgehäuses aufgenommen ist und die Antriebseinheit außerhalb des Aktormodulgehäuses an dem zweiten Aktormodulgehäuseteil angeordnet ist.

Hierdurch kann einfach ein Aktormodul bereitgestellt werden, welches alle notwendigen Bauteile aufweist, um ein Moment und/oder eine Kraft einer Drehachse zu beaufschlagen. Dadurch, dass das Aktormodulgehäuse mit dem Gehäusemodul und dem Steuerhebel verbindbar ist, muss lediglich das Aktormodul entfernt werden, wenn dieses eine Defekt aufweisen sollte.

Das Hohlrad des Planetengetriebes kann als ein integraler Bestandteil des erste Aktormodulgehäuses ausgebildet sein.

Weiter bevorzugt handelt es sich bei dem Rückstellmodul um ein passives Rückstellmodul. Das heißt, dass keine aktive Steuerung bzw. Regelung des Rückstellmoduls vorgesehen ist.

Insbesondere ist es denkbar, dass bei einer Auslenkung des Steuerhebels aus der Grundposition eine Kraft beaufschlagt wird, mittels welcher der Steuerhebel in die Grundposition rückführbar ist.

Gemäß einer bevorzugten Ausführungsform ist es vorgesehen, dass das Rückstellmodul ein Rückstellmodulgehäuse umfasst, wobei das Rückstellmodulgehäuse aus einem ersten Rückstellmodulgehäuseteil, welches mit dem Gehäusemodul verbindbar ist, und einem zweiten Rückstellmodulgehäuseteil ausgebildet ist, wobei das Rückstellmodul ein Drehfederelement, einen relativ zu dem Rückstellmodulgehäuse drehbaren Drehfederelementträger und eine gegenüber dem Rückstellmodulgehäuse ortsfest angeordnete Drehfederelementbasis umfasst, wobei das Drehfederelement mit dem Drehfederelementträger und der Drehfederelementbasis verbunden ist.

Durch eine Drehung des Drehfederelementträgers relativ zu der Drehfederelementbasis wird das Drehfederelement ausgelenkt, wodurch eine Federkraft erzeugt wird, welche auf eines der Führungselemente übertragbar ist.

Besonders bevorzugt ist der Drehfederelementträger mit einem der Führungselemente verbindbar.

Bevorzugt handelt es sich bei dem Drehfederelement um eine Schenkelfeder, wobei auch andere Arten von Drehfedern denkbar sind.

Hierdurch kann einfach ein Rückstellmodul bereitgestellt werden, welches alle notwendigen Bauteile aufweist, um ein eine Kraft einer Drehachse zu beaufschlagen. Dadurch, dass das Rückstellmodul mit dem Gehäusemodul und dem Steuerhebel verbindbar ist, muss lediglich das Rückstellmodul entfernt werden, wenn dieses eine Defekt aufweisen sollte.

Gemäß einer weiteren bevorzugten Ausführungsform ist es vorgesehen, dass die Führungselemente jeweils einen ersten Lagerstellenabschnitt und einen zweiten Lagerstellenabschnitt aufweisen, wobei der erste Lagerstellenabschnitt eines Führungselements einen ersten Anschlussbereich und der zweite Lagerstellenabschnitt eines Führungselements einen zweiten Anschlussbereich umfasst. Besonders bevorzugt sind die Lagerstellenabschnitte eines Führungselements gleich ausgebildet. Weiter bevorzugt unterscheiden sich die Lagerstellenabschnitte eines Führungselements von den Lagerstellabschnitte des anderen Führungselements.

Bevorzugt ist der jeweilige Lagerstellenabschnitt derart ausgebildet, um von einer Lagerstelle aufgenommen werden zu können. Bevorzugt sind alle Lagerstellen und alle Lagerstellenabschnitte identisch, wodurch eine Reduzierung von Herstellungsprozessen möglich ist. Weiter muss nicht auf eine bestimmte Orientierung der Führungselemente beim Zusammenbau geachtet werden.

Sich unterscheidende Anschlussbereich sind dahingehend vorteilhaft, wenn verschiedene Zusatzmodule vorgesehen sein sollen. Besonders bevorzugt kann es daher vorgesehen sein, dass das Zusatzmodul einen ersten Zusatzmodulanschlussbereich umfasst, welcher komplementär zu dem ersten Anschlussbereich ist, oder einen zweiten Zusatzmodulanschlussbereich umfasst, welcher komplementär zu dem zweiten Anschlussbereich ausgebildet ist.

So ist es denkbar, dass dem Aktormodul der erste Anschlussbereich und dem Rückstellmodul der zweite Anschlussbereich zugeordnet ist, oder umgekehrt. So lässt sich beispielsweise festlegen, dass an einem Führungselement lediglich ein Aktormodul und ein Rückstellmodul angeordnet werden kann. Eine versehentliche Montage von zwei Aktormodulen oder zwei Rückstellmodulen für ein Führungselement kann daher ausgeschlossen werden, so dass Fehlfunktionen während des Betriebs verhindert werden können.

Besonders bevorzugt ist es vorgesehen, dass das Gehäusemodul vier Durchgangsöffnungen und vier Kupplungsbereiche umfassend jeweils eine Lagerstelle aufweist, wobei sich die erste Drehachse durch zwei gegenüberliegende Durchgangsöffnungen und sich die zweite Drehachse durch die zwei weiteren gegenüberliegenden Durchgangsöffnungen erstreckt.

Das heißt, dass an jedem Führungselement bis zu zwei Zusatzmodule anordenbar sind. Durch eine derartige Ausgestaltung des Gehäusemoduls können daher die folgenden Anordnungen hinsichtlich des Gehäusemoduls sein:
- Kein Aktormodul, ein Aktormodul, zwei Aktormodule
- Kein Rückstellmodul, ein Rückstellmodul, zwei Rückstellmodule,
- Jede Kombination aus den Vorhergehenden.

Für den Fall, dass an dem Gehäusemodul kein Zusatzmodul an der entsprechenden Stelle vorgesehen ist, kann ein Blinddeckel vorgesehen sein, mittels welchem der entsprechende Kupplungsbereich abgedeckt werden kann, um ein Eindringen von Schmutz, Wasser oder dergleichen verhindern zu können. Bevorzugt kann der Blinddeckel einen Bereich umfassen, welcher zumindest teilweise, bevorzugt vollständig, komplementär zu dem Kupplungsbereich ausgebildet ist.

Weitere Vorteile, Ziele und Eigenschaften vorliegender Erfindung werden anhand anliegender Zeichnung und nachfolgender Beschreibung erläutert, in welchen eine Steuervorrichtung beispielhaft dargestellt und beschrieben ist.

In den Zeichnungen zeigen:
- Fig. 1a: eine Steuervorrichtung gemäß einer bevorzugten Ausführungsform;
- Fig. 1b: eine Steuervorrichtung gemäß einer weiteren bevorzugten Ausführungsform;
- Fig. 2: Gehäusemodul der Steuervorrichtung in einer Explosionsdarstellung;
- Fig. 3: Aktormodul der Steuervorrichtung in einer Explosionsdarstellung;
- Fig. 4: Rückstellmodul der Steuervorrichtung in einer Explosionsdarstellung;
- Fig. 5: verschiedene Anordnungen der Module zueinander.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

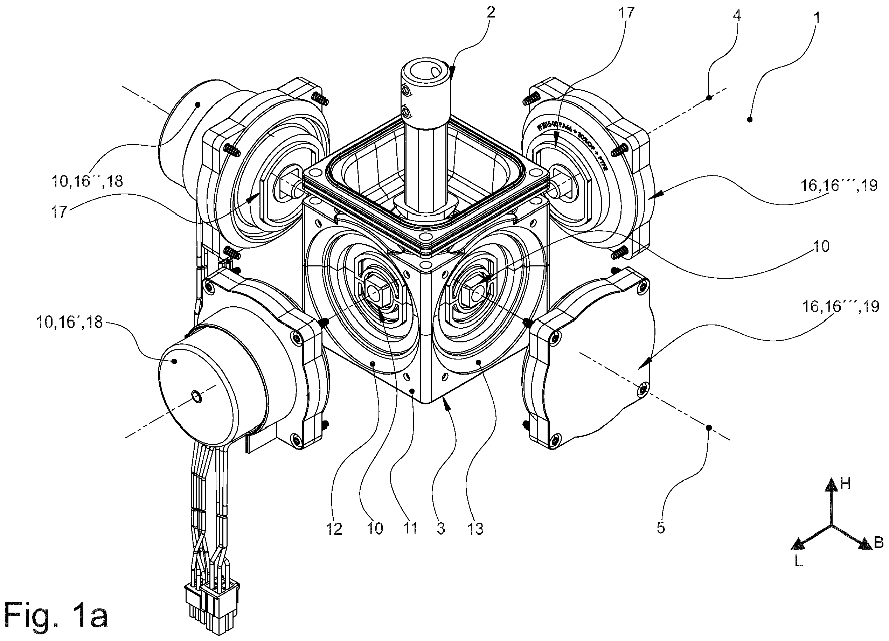

Die Figur 1A zeigt eine perspektivische Ansicht einer Steuervorrichtung 1 gemäß einer bevorzugten Ausführungsform. Dabei umfasst die Steuervorrichtung 1 ein Gehäusemodul 3 und einen Steuerhebel 2, welcher vorliegend nur teilweise abgebildet ist. Weiter sind Zusatzmodule 16, 16', 16", 16‴, 16ʺʺ dargestellt, wobei ein erstes Zusatzmodul 16' und ein zweites Zusatzmodul 16" als ein Aktormodul 18 und ein drittes Zusatzmodul 16‴ und ein viertes Zusatzmodul 16ʺʺ als ein Rückstellmodul 19 ausgebildet.

Ebenso sind ein erstes Kupplungsbereich 12 und ein zweiter Kupplungsbereich 13 zu erkennen, wobei der dritte Kupplungsbereich 14 und der vierte Kupplungsbereich 15 durch das Gehäusemodul 3 verdeckt sind. Die Kupplungsbereiche 12, 13, 14, 15 sind komplementär zu dem jeweiligen Zusatzmodul 16 ausgebildet, so dass eine gute Aufnahme des Zusatzmoduls 16 möglich ist. Hierzu ist ein komplementärer Bereich 17 des Zusatzmoduls 16 vorgesehen

Ebenso weist jeder Kupplungsbereich 12, 13, 14, 15 eine Durchgangsöffnung 10 auf, welche als eine Lagerstelle 10 für ein Führungselement 6, 7, welches ebenso verdeckt ist, ausgebildet ist.

Das Gehäusemodul 3, ein Aktormodul 18 und ein Rückstellmodul 19 werden in den nachfolgenden Figuren näher dargestellt und beschrieben.

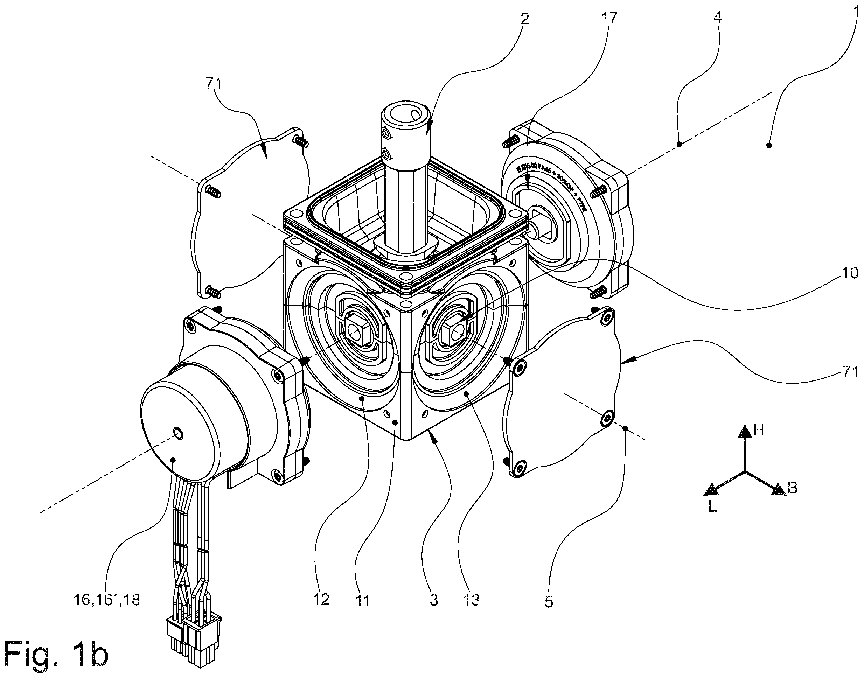

In der Figur 1B ist eine ähnliche Ausgestaltung der Steuervorrichtung 1 dargestellt, wobei jedoch ein Aktormodul 18 und das diesem Aktormodul 18 gegenüberliegendes Rückstellmodul 19 entfernt worden sind und durch einen Blinddeckel 71 ersetzt worden sind. Dadurch ist eines der Führungselemente 6, 7 ohne äußeren Einfluss vorgesehen, so dass hier keine äußeren Krafteinwirkungen auf das entsprechende Führungselement 6, 7 vorgesehen sind.

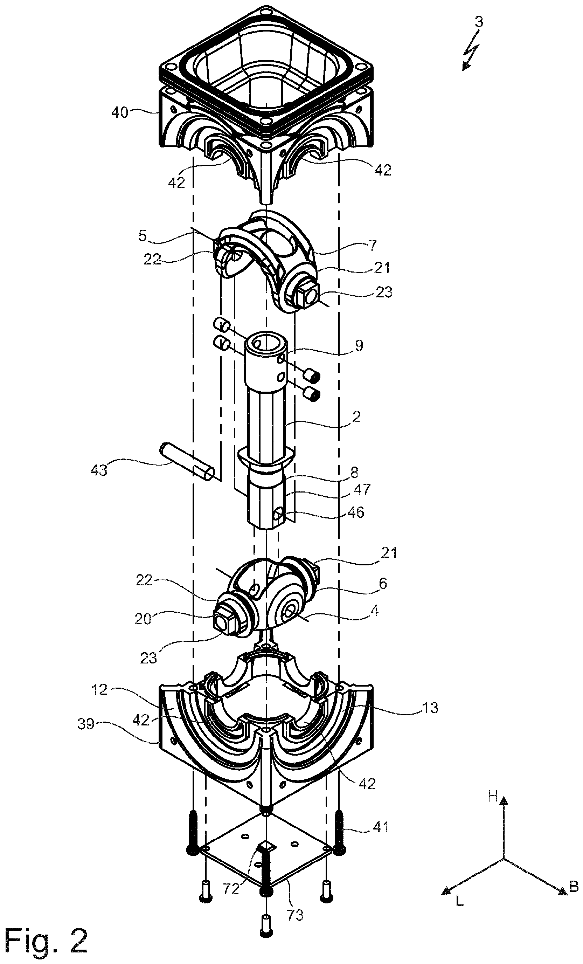

In der Figur 2 ist das Gehäusemodul 3 der Steuervorrichtung 1 gemäß einer bevorzugten Ausführungsform näher dargestellt.

Bevorzugt besteht das Gehäusemodul 3 aus einem ersten Gehäusemodulteil 39 und einem zweiten Gehäusemodulteil 40, welche bevorzugt mittels Schrauben 41 miteinander verbindbar sind. Die Gehäusemodulteile 39, 40 weisen jeweils Durchgangsöffnungsabschnitte 42 auf, welche jeweils derart hinsichtlich der Gehäusemodulteile 39, 40 ausgebildet sind, dass aus den Durchgangsöffnungsabschnitte 42 eine Durchgangsöffnung 10 ausbilden. Besonders bevorzugt sind die alle Durchgangsöffnungen 10 identisch ausgebildet. Besonders bevorzugt kann ein unteres Deckelelement 73 vorgesehen sein, welches ebenso mittels Schrauben 41 mit dem ersten Gehäusemodulteil 39 verbunden ist, wobei weiter bevorzugt das Deckelelement durch ein PCBA 73 ausgebildet sein kann, wobei das PCBA 73 einen Sensor 72 aufweist, welcher derart angeordnet ist, dass dieser mit dem Magneten 49 wechselwirken kann und so eine Ausgangsstellung bzw. Neutralstellung erkannt werden kann.

Eine derartige Ausgestaltung kann den Zusammenbau des Gehäusemoduls erleichtern, da Lagerstellenabschnitte 20, 21 der Führungselemente 6, 7 bereits zumindest teilweise in die Durchgangsöffnungen 10 eingebracht werden können.

Die Lagerstellenabschnitte 20, 21 der Führungselemente 6, 7 sind derart ausgebildet, mit den Durchgangsöffnungen 10 bzw. Lagerstellen 10 verbunden werden zu können. An jedem Lagerstellenabschnitt 20, 21 ist erster Anschlussbereich 22 oder ein zweiter Anschlussbereich 23 angeordnet.

Vorzugsweise weisen die Lagerstellenabschnitte 20, 21 eines Führungselements 6, 7 jeweils den ersten Anschlussbereich 22 und die Lagerstellenabschnitte 20, 21 des anderen Führungselements 6, 7 jeweils den zweiten Anschlussbereich 23.

Weiter sind Kupplungsbereiche 12, 13, 14, 15 vorgesehen, wobei in der Figur 2 durch die Darstellung nur ein erster Kupplungsbereich 12 und ein zweiter Kupplungsbereich 13 erkennbar sind. Analog zu den Durchgangsöffnungen 10 bzw. Lagerstellen 10 sind die Kupplungsbereiche 12, 13, 14, 15 jeweils aus einem ersten Kupplungsteilbereich 44 und einem zweiten Kupplungsteilbereich 45 ausgebildet, wobei der erste Kupplungsteilbereich 44 an dem ersten Gehäusemodulteil 39 und der zweite Kupplungsteilbereich 45 an dem zweiten Gehäusemodulteil 40 ausgebildet sind. Ist das Gehäusemodul 3 bestehend aus dem ersten Gehäusemodulteil 39 und dem zweiten Gehäusemodulteil 40 zusammengebaut, so ergänzen sich die Gehäusemodulteile 39, 40 derart, dass die Kupplungsteilbereiche 44, 45 den jeweiligen Kupplungsbereich 12, 13, 14, 15 ausgestalten.

Die Führungselemente 6, 7 sind in den Lagerstellen 10 drehbar gelagert, wobei das erste Führungselement 6 drehbar um eine erste Drehachse 4 und das zweite Führungselement 7 drehbar um eine zweite Drehachse 5 drehbar sind. Bevorzugt sind die erste Drehachse 4 und die zweite Drehachse 5 senkrecht zueinander ausgebildet.

Der Steuerhebel 2 kann nicht in seinem vollen Umfang dargestellt werden, so dass er einen zusätzlichen Anteil aufweisen kann, welcher zu bessern Handhabung vorgesehen sein kann. Bevorzugt ist dieser Anteil an dem zweiten Ende 9 des Steuerhebels 2 angeordnet sein.

Der Steuerhebel 2 weist ebenso ein erste Ende 8 auf, wobei das erste Ende 8 bevorzugt einen Durchgang 46 aufweist, in welchen ein Verbindungsstab 43 eingebracht werden kann, um das erste Führungselement 6 drehbar mit dem Steuerhebel 2 zu verbinden.

Zwischen dem ersten Ende 8 und dem zweiten Ende 9 des Steuerhebels 2 ist das zweite Führungselement 9 angeordnet. Bevorzugt ist eine Gelenkwellenbuchse 47 vorgesehen, welche ebenso mittels des Verbindungsstabs 43 mit dem ersten Führungselement 6 verbindbar ist und derart mit dem zweiten Führungselement 7 verbindbar ist, so dass die Gelenkwellenbuchse 47 als eine Führung in einer Führungskulisse des zweiten Führungselements 7 fungieren kann. Ebenso ist es bevorzugt vorgesehen, dass die Gelenkwellenbuchse 47 mit dem Steuerhebel 2 verbindbar ist, mittels des Verbindungsstabs 43. Weiter bevorzugt kann die Gelenkwellenbuchse 47 eine Aufnahme aufweisen, in welche der Steuerhebel 2 einbringbar ist, wobei die Aufnahme bevorzugt komplementär zu der Ausgestaltung des Steuerhebels ist, zumindest hinsichtlich des ersten Endes 8.

Weiter bevorzugt ist eine Feder vorgesehen, welche mit einerseits mit der Gelenkwellenbuchse 47 und anderseits mit dem Steuerhebel 2 wirkverbunden ist. Dabei ist die Feder vorgespannt eingebaut, so dass eine Federkraft zwischen der Gelenkwellenbuchse 47 und dem Steuerhebel 2 wirkt, so dass äußere Krafteinwirkungen auf den Steuerhebel 2 nicht direkt und vollständig auf den Verbindungsstab 43 einwirken können, so dass hier eine Schutzfunktion vorgesehen ist.

Ebenso bevorzugt ist ein Magnet 49 vorgesehen, welcher ebenso eine Gegenkraft auf den Steuerhebel 2 ausüben kann, wobei der Magnet bevorzugt mit der Gelenkwellenbuchse 47 verbunden ist. Besonders bevorzugt weist der Steuerhebel 2 an seinem unteren Ende 8 einen Gegenmagneten auf, welcher in seiner Polarität entgegengesetzt zu dem Magneten 49 angeordnet ist.

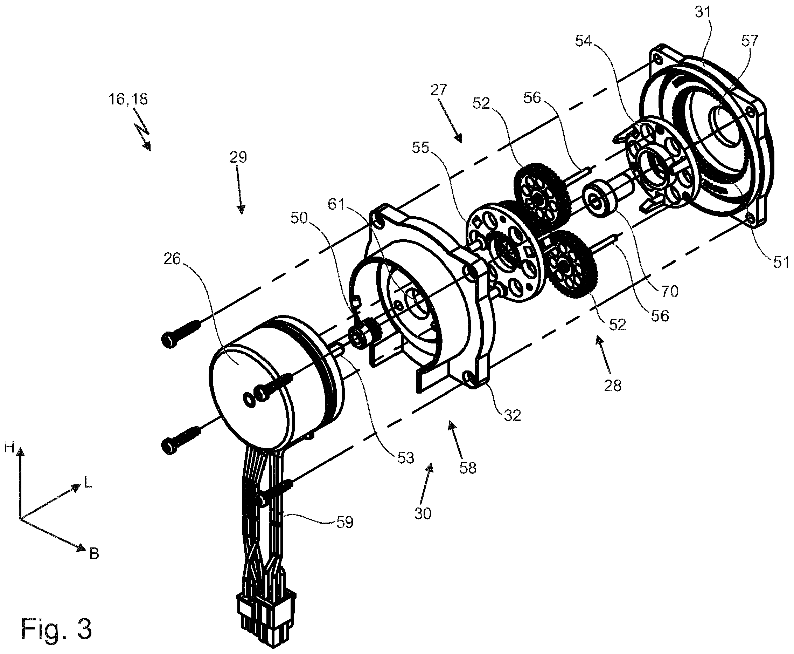

In der Figur 3 ist ein Zusatzmodul 16 dargestellt, welches als ein Aktormodul 18 ausgebildet ist.

Das Aktormodul 18 umfasst eine Antriebseinheit 26 und eine Abtriebseinheit 27, wobei bevorzugt die Antriebseinheit 26 als ein Elektromotor 29 und die Abtriebseinheit 27 als ein Planetengetriebe 28 ausgebildet sind. Ebenso umfasst das Aktormodul 18 ein Aktormodulgehäuse 30 umfassend ein erstes Aktormodulgehäuseteil 31 und ein zweites Aktormodulgehäuseteil 32.

Bevorzugt ist es, wenn das Planetengetriebe 28 ein drehbar gelagertes Sonnenrad 50, ein das Sonnenrad 50 radial umgebendes Hohlrad 51 sowie mehrere, bevorzugt drei radial zwischen dem Sonnenrad 50 und dem Hohlrad 51 angeordnete und damit verzahnte Planetenräder 52 umfassen. Bevorzugt ist das Sonnenrad 50 fluchtend zu einer der Drehachsen 4, 5 angeordnet und um diese drehbar gelagert.

Bevorzugt ist das Hohlrad 51 feststehend gelagert; der Abtrieb erfolgt also bevorzugt nicht über das Hohlrad 51. Das Hohlrad 51 ist bevorzugt als ein Teil des ersten Aktormodulgehäuseteils 31 ausgebildet.

Hierdurch ist das Hohlrad 51 verdrehsicher hinsichtlich des Aktormoduls 18 ausgebildet, so dass die radiale Position des Hohlrads 51 gegenüber einem Rest des Aktormoduls 18 fixiert ist.

Bevorzugt erfolgt der Antrieb über eine Welle des Elektromotors 53 bzw. Motors (Motorwelle) und über das Sonnenrad 51, wobei eine Mittelachse der Welle 53 des Elektromotors 29 bevorzugt mit einer Mittelachse des Sonnenrads 51 fluchtet. Weiter bevorzugt steht die Welle 53 des Motors 29 mit dem Sonnenrad 51 im mechanischen Eingriff, so dass ein Drehmoment des Motors 29 auf das Sonnenrad 51 übertragbar ist; bevorzugt sind die Welle 53 und das Sonnenrad 51 starr miteinander verbunden. Somit ist insbesondere eine Drehung der Motorachse in eine gleichgerichtete und hinsichtlich der Drehzahl identische Drehung des Sonnenrads 51 übertragbar.

Die Planetenräder 52 sind mittels eines Trägerelements bestehend aus einem ersten Trägerelementteil 54 und einem zweiten Trägerelementteil 55 getragen, wobei bevorzugt das Trägerelement für jedes Planetenrad 52 eine Drehwelle 56 umfasst, mittels welcher das jeweilige Planetenrad 52 drehbar verbunden ist.

Das Trägerelement und insbesondere das erste Trägerelementteil 54 bildet einen ersten Zusatzmodulanschluss 24 oder zweiten Zusatzmodulanschluss 25 auf, welcher mit dem entsprechenden komplementär ausgebildeten Anschlussbereichs 22, 23 der Führungselemente 6, 7 verbindbar ist. Dazu ist bevorzugt ein erster Durchgang 57 des ersten Aktormodulgehäuseteils 31 vorgesehen, durch welches sich die Verbindung zwischen dem Anschlussbereich 22, 23 und dem Zusatzmodulanschluss 24, 25 hindurch erstrecken kann.

Weiter bevorzugt ist es vorgesehen, dass die Abtriebseinheit 27 in einem Inneren des Aktormodulgehäuses 30 angeordnet ist. Bevorzugt ist die Antriebseinheit 26 außerhalb des Aktormodulgehäuses 30 angeordnet, wobei bevorzugt das zweite Aktormodulgehäuseteil 32 eine Aufnahme 58 aufweist, welche zumindest teilweise komplementär zu der Antriebseinheit 27 beziehungsweise dem Elektromotor 29 ausgebildet ist und dafür vorgesehen ist, den Elektromotor 29 aufzunehmen, bevorzugt sicher aufzunehmen, um ein Herausfallen verhindern zu können.

Der Elektromotor 29 weist bevorzugt einen elektrischen Anschluss 59 zum Betrieb des Elektromotors 29 auf, wobei bevorzugt die Aufnahme 58 derart ausgebildet ist, um den elektrischen Anschluss 59 mit aufzunehmen. Bevorzugt weist die Aufnahme 58 einen nach unten geöffneten Anteil 60 auf, welcher den elektrischen Anschluss 59 aufnehmen kann.

Das zweite Aktormodulgehäuseteil 32 weist einen zweiten Durchgang 61 auf, durch welchen sich die Motorwelle 52 und/oder das Sonnenrad 51 hindurch erstrecken kann.

Bevorzugt ist eine Getriebebefestigung 70 vorgesehen, welche besonders bevorzugt als ein Schraubenelement ausgebildet ist. Mittels der Getriebefestigung 70 ist es möglich, das erste Trägerelementteil 54 und den jeweiligen Anschlussbereich 22, 23 miteinander zumindest wirktechnisch zu verbinden. Der Schraubenkopf der Getriebefestigung 70 dient insbesondere als Gegenlager zu dem ersten Trägerelementteil 54.

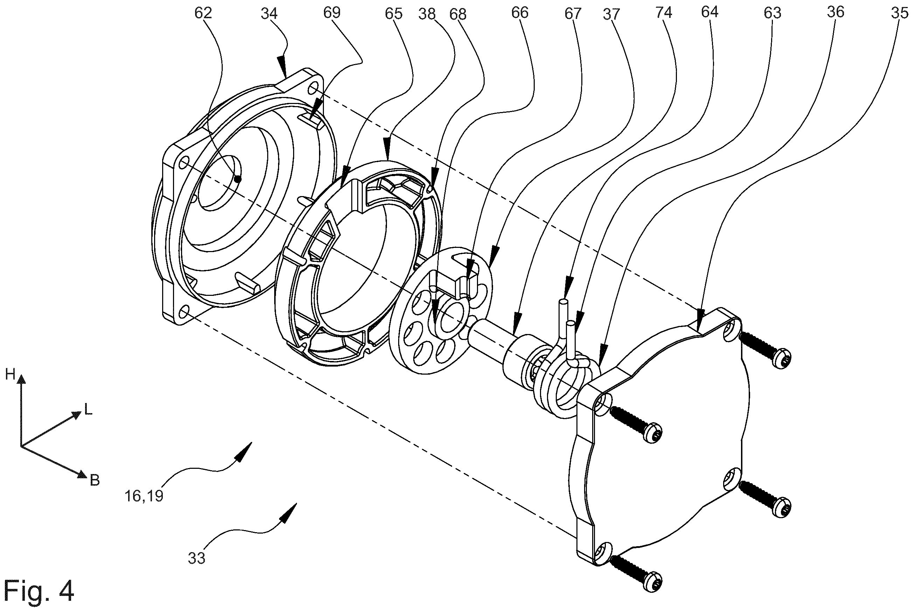

In der Figur 4 ist ein weiteres Zusatzmodul 16 dargestellt, welches als ein Rückstellmodul 19 ausgebildet ist.

Gemäß einer bevorzugten Ausführungsform ist es vorgesehen, dass das Rückstellmodul 19 ein Rückstellmodulgehäuse 33 umfasst, wobei das Rückstellmodulgehäuse 33 aus einem ersten Rückstellmodulgehäuseteil 34, welches mit dem Gehäusemodul 3 verbindbar ist, und einem zweiten Rückstellmodulgehäuseteil 35 ausgebildet ist, wobei das Rückstellmodul 19 ein Drehfederelement 36, einen relativ zu dem Rückstellmodulgehäuse 33 drehbaren Drehfederelementträger 37 und eine gegenüber dem Rückstellmodulgehäuse 33 ortsfest angeordnete Drehfederelementbasis 38 umfasst, wobei das Drehfederelement 36 mit dem Drehfederelementträger 37 und der Drehfederelementbasis 38 verbunden ist.

Durch eine Drehung des Drehfederelementträgers 37 relativ zu der Drehfederelementbasis 38 wird das Drehfederelement 36 ausgelenkt, wodurch eine Federkraft erzeugt wird, welche auf eines der Führungselemente 6, 7 übertragbar ist.

Der Drehfederelementträger 37 umfasst bevorzugt den ersten Zusatzmodulanschlussbereich 24 oder den zweiten Zusatzmodulanschlussbereich 25, welcher mit dem ersten Anschlussbereich 22 oder dem zweiten Anschlussbereich 23 verbindbar ist, wobei sich die Verbindung zwischen Zusatzmodulanschlussbereich 24, 25 und Anschlussbereich 22, 23 durch einen dritten Durchgang 62 des Rückstellmoduls 19, insbesondere des Rückstellmodulgehäuse 33, hindurch erstreckt.

Besonders bevorzugt ist der Drehfederelementträger 37 mit einem der Führungselemente 6, 7 verbindbar. Weiter bevorzugt ist der Drehfederelementträger 37 mittels eines Schraubenelements 74 mit einem der Führungselemente 6, 7 verbunden, wobei weiter bevorzugt der Kopf des Schraubenelements 74 als eine Zentralwelle dienen kann, um das Drehfederelement 36 in seiner Position anordnen zu können.

Bevorzugt handelt es sich bei dem Drehfederelement 36 um eine Schenkelfeder, wobei auch andere Arten von Drehfedern denkbar sind.

Hierdurch kann einfach ein Rückstellmodul 19 bereitgestellt werden, welches alle notwendigen Bauteile aufweist, um ein eine Kraft einer Drehachse zu beaufschlagen. Dadurch, dass das Rückstellmodul mit dem Gehäusemodul und dem Steuerhebel verbindbar ist, muss lediglich das Rückstellmodul entfernt werden, wenn dieses eine Defekt aufweisen sollte.

Das Drehfederelement 36 weist bevorzugt ein erstes Ende 63 und ein zweites Ende 64 auf, wobei bevorzugt das erste Ende 63 mit der Drehfederelementbasis 38 und das zweite Ende mit dem Drehfederelementträger 37 zumindest wirkverbunden ist. Die Drehfederelementbasis 38 weist eine Vertiefung 65 auf, welche eine Ausdehnung in Umfangsrichtung der Drehfederelementbasis 37 und in Längsrichtung L aufweist, so dass das erste Ende 63 in dieser Vertiefung 65 aufgenommen ist.

Bevorzugt ist die Drehfederelementbasis 38 kreisringförmig ausgebildet, wobei weiter bevorzugt der Drehfederelementträger 37 derart ausgebildet ist, von der Drehfederelementbasis 38 zumindest teilweise umschlossen zu sein, so dass die Drehfederelementbasis 38 den Drehfederelementträger 37 zumindest teilweise aufnehmen kann, so dass eine kompaktere Bauweise möglich ist.

Die Drehfederelementbasis 38 weist umfangsseitig Einkerbungen 68 auf, welche mit Vorsprüngen 69 des ersten Rückstellmodulgehäuseteils 34 verbindbar sind. Besonders bevorzugt sind die Einkerbungen 68 und die Vorsprünge 69 komplementär zueinander ausgebildet. Es ist auch denkbar, dass die Drehfederelementbasis 38 die Vorsprünge 69 und das erste Rückstellmodulgehäuseteil 34 die Einkerbungen 68 aufweist.

Weiter bevorzugt weist der Drehfederelementträger 37 eine Drehfederaufnahme 66, an welcher das Drehfederelement 36 angeordnet sein kann. Weiter bevorzugt umfasst der Drehfederelementträger 37 ein Drehfederwiderlager 67, welches mit dem zweiten Ende 64 des Drehfederelements 36 verbindbar ist.

Das Drehfederelement 36, die Drehfederelementbasis 38 und der Drehfederelementträger 37 sind bevorzugt innerhalb des Rückstellmodulgehäuses 33 angeordnet.

Bevorzugt dient das zweite Rückstellmodulgehäuseteil 35 als ein Deckelelement zum Verschließen des Rückstellmodulgehäuses 35 nach außen.

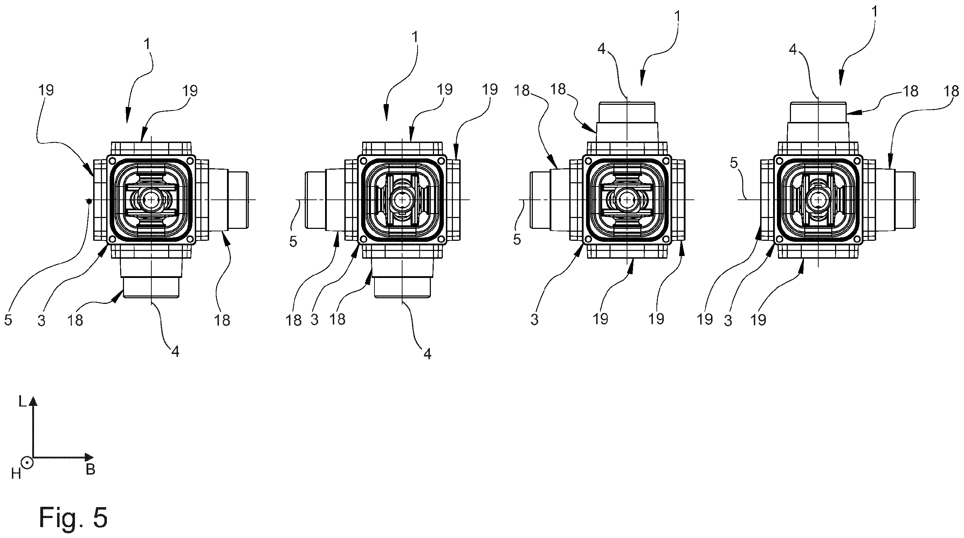

Gemäß der Figur 5 sind verschiedene Stellungen der Steuervorrichtung 1 dargestellt, wobei gemäß der dargestellten Ausführungsform mögliche Anordnungen von Zusatzmodulen 16, 18, 19 und Gehäusemodul 3 dargestellt sind. Bevorzugt sind zwei Aktormodule 18 und zwei Rückstellmodule 19 vorgesehen, wobei hinsichtlich einer Drehachse 4, 5 jeweils ein Aktormodul 18 und ein Rückstellmodul 19 zugeordnet sind. Je nach möglichem Platz beim Einbau einer Steuervorrichtung 1 können die Zusatzmodule 16, 18, 19 unterschiedlich an dem Gehäusemodul 3 angeordnet sein.

Prinzipiell kann das Gehäusemodul 3 mit einer beliebigen Kombination von Zusatzmodulen 16 vorgesehen sein, wobei alle Kombinationen denkbar sind, aus:
- Kein Aktormodul 18, ein Aktormodul 18, zwei Aktormodule 18;
- Kein Rückstellmodul 19, ein Rückstellmodul 19, zwei Rückstellmodule 19;
- Falls an zumindest einer Stelle kein Zusatzmodul 16, 18, 19 vorgesehen ist, kann diese Stelle mit dem Blinddeckel 71 abgedeckt sein;
- Jede Kombination aus den Vorhergehenden.

Das bedeutet, dass beispielsweise kein Aktormodul 18 und kein Rückstellmodul 19 vorgesehen sein können, oder ein Aktormodul 18 und kein Rückstellmodul 19, oder zwei Aktormodule 18 und kein Rückstellmodul 19, zwei Aktormodule 18 und ein Rückstellmodul 19, zwei Aktormodule 18 und zwei Rückstellmodule 19.

Besonders bevorzugt kann jedes Führungselement 6, 7 mit höchstens einem Aktormodul 18 und höchstens einem Rückstellmodul 19 verbunden sein.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Steuervorrichtung
- 2: Steuerhebel
- 3: Gehäusemodul
- 4: erste Drehachse
- 5: zweite Drehachse
- 6: erstes Führungselement
- 7: zweites Führungselement
- 8: erstes Ende des Steuerhebels
- 9: zweites Ende des Steuerhebels
- 10: Durchgangsöffnung, Lagerstelle
- 11: Außenseite
- 12: erster Kupplungsbereich
- 13: zweiter Kupplungsbereich
- 14: dritter Kupplungsbereich
- 15: vierter Kupplungsbereich
- 16: Zusatzmodul
- 16': erstes Zusatzmodul
- 16": zweites Zusatzmodul
- 16‴: drittes Zusatzmodul
- 16ʺʺ: viertes Zusatzmodul
- 17: komplementärer Bereich
- 18: Aktormodul
- 19: Rückstellmodul
- 20: erster Lagerstellenabschnitt
- 21: zweiter Lagerstellenabschnitt
- 22: erster Anschlussbereich
- 23: zweiter Anschlussbereich
- 24: erster Zusatzmodulanschlussbereich
- 25: zweiter Zusatzmodulanschlussbereich
- 26: Antriebseinheit
- 27: Abtriebseinheit
- 28: Planetengetriebe
- 29: Elektromotor
- 30: Aktormodulgehäuse
- 31: erstes Aktormodulgehäuseteil
- 32: zweites Aktormodulgehäuseteil
- 33: Rückstellmodulgehäuse
- 34: erstes Rückstellmodulgehäuseteil
- 35: zweites Rückstellmodulgehäuseteil
- 36: Drehfederelement
- 37: Drehfederelementträger
- 38: Drehfederelementbasis
- 39: erstes Gehäusemodulteil
- 40: zweites Gehäusemodulteil
- 41: Schraube
- 42: Durchgangsöffnungsabschnitt
- 43: Verbindungsstab
- 44: erster Kupplungsteilbereich
- 45: zweiter Kupplungsteilbereich
- 46: Durchgang
- 47: Gelenkwellenbuchse
- 49: Magnet
- 50: Sonnenrad
- 51: Hohlrad
- 52: Planetenrad
- 53: Motorwelle
- 54: erster Trägerelementteil
- 55: zweiter Trägerelementteil
- 56: Drehwelle
- 57: erster Durchgang
- 58: Aufnahme
- 59: elektrischer Anschluss
- 60: nach unten geöffneter Anteil
- 61: zweiter Durchgang
- 62: dritter Durchgang
- 63: erstes Ende des Drehfederelements
- 64: zweites Ende des Drehfederelements
- 65: Vertiefung
- 66: Drehfederaufnahme
- 67: Drehfederwiderlager
- 68: Einkerbung
- 69: Vorsprung
- 70: Getriebebefestigung
- 71: Blinddeckel
- 72: Sensor
- 73: unteres Deckelelement; PCBA
- 74: Schraubenelement
- L: Längsrichtung
- B: Breitenrichtung
- H: Höhenrichtung

## Patentansprüche

1. Steuervorrichtung (1) zum Bedienen mindestens eines Aktors eines Fahrzeugs, wobei die Steuervorrichtung (1) einen auslenkbaren Steuerhebel (2) und ein Gehäusemodul (3) umfasst, wobei ein um eine erste Drehachse (4) drehbares erstes Führungselement (6) und ein um eine zweite Drehachse (5) drehbares zweites Führungselement (7) vorgesehen sind, wobei das erste Führungselement (6) an einem ersten Ende (8) des Steuerhebels (2) angeordnet ist und das zweite Führungselement (7) zwischen dem ersten Ende (8) und einem zweiten Ende (9) des Steuerhebels (2) angeordnet ist,
**dadurch gekennzeichnet, dass**
das Gehäusemodul (3) mindestens eine Durchgangsöffnung (10) aufweist, welche als Lagerstellen (10) zum Lagern der Führungselemente (6, 7) ausgebildet sind, so dass die Führungselemente (6, 7) von außerhalb des Gehäusemoduls (3) kontaktierbar sind,
wobei das Gehäusemodul (3) auf einer Außenseite (11) einen ersten Kupplungsbereich (12) aufweist, wobei der erste Kupplungsbereich (12) eine Lagerstelle (10) der Lagerstellen (10) umfasst und der erste Kupplungsbereich (12) dazu ausgebildet und vorgesehen ist, ein Zusatzmodul (16), welches einen zumindest teilweise komplementär zu der dem ersten Kupplungsbereich (12) ausgebildeten Bereich (17) umfasst, derart aufzunehmen, dass das Zusatzmodul (16) funktional mit dem Führungselement (6, 7) verbindbar ist.

2. Steuervorrichtung (1) nach Anspruch 1,
**dadurch gekennzeichnet, dass**
das Zusatzmodul (16) eines ist ausgewählt aus einem Aktormodul (18) und einem Rückstellmodul (19), wobei das Aktormodul (18) dazu ausgebildet ist, eine der Drehachsen (4, 5) mit einem Drehmoment zu beaufschlagen, und wobei das Rückstellmodul (19) dazu ausgebildet ist, eine der Drehachsen (4, 5) mit einer Kraft zu beaufschlagen, welche einer Auslenkung des Steuerhebels (2) entgegenzuwirken.

3. Steuervorrichtung (1) nach Anspruch 1 oder 2,
**dadurch gekennzeichnet, dass**
die Führungselemente (6, 7) jeweils einen ersten Lagerstellenabschnitt (20) und einen zweiten Lagerstellenabschnitt (21) aufweisen, wobei der erste Lagerstellenabschnitt (20) eines Führungselements (6, 7) einen ersten Anschlussbereich (22) und der zweite Lagerstellenabschnitt (21) eines Führungselements (6, 7) einen zweiten Anschlussbereich (23) umfasst.

4. Steuervorrichtung (1) nach Anspruch 3,
**dadurch gekennzeichnet, dass**
das Zusatzmodul (16) einen ersten Zusatzmodulanschlussbereich (24) umfasst, welcher komplementär zu dem ersten Anschlussbereich (22) ist, oder einen zweiten Zusatzmodulanschlussbereich (25) umfasst, welcher komplementär zu dem zweiten Anschlussbereich (23) ausgebildet ist.

5. Steuervorrichtung (1) nach Anspruch 2,
**dadurch gekennzeichnet, dass**
das Aktormodul (18) eine Antriebseinheit (26) und eine Abtriebseinheit (27) umfasst, wobei das Aktormodul (18) eine Motor-Getriebe-Kombination ausbildet, wobei die Abtriebseinheit (27) durch ein Planetengetriebe (28) und die Antriebseinheit (26) als ein Elektromotor (29) ausgestaltet sind.

6. Steuervorrichtung (1) nach Anspruch 5,
**dadurch gekennzeichnet, dass**
das Aktormodul (18) ein Aktormodulgehäuse (30) umfasst, wobei das Aktormodulgehäuse (30) aus einem ersten Aktormodulgehäuseteil (31), welches mit dem Gehäusemodul (3) verbindbar ist, und einem zweiten Aktormodulgehäuseteil (32) ausgebildet ist, wobei die Abtriebseinheit (27) innerhalb des Aktormodulgehäuses (30) aufgenommen ist und die Antriebseinheit (26) außerhalb des Aktormodulgehäuses (30) an dem zweiten Aktormodulgehäuseteil (32) angeordnet ist.

7. Steuervorrichtung (1) nach Anspruch 2,
**dadurch gekennzeichnet, dass**
das Rückstellmodul (19) ein Rückstellmodulgehäuse (33) umfasst, wobei das Rückstellmodulgehäuse (33) aus einem ersten Rückstellmodulgehäuseteil (34), welches mit dem Gehäusemodul (3) verbindbar ist, und einem zweiten Rückstellmodulgehäuseteil (35) ausgebildet ist, wobei das Rückstellmodul (19) ein Drehfederelement (36), einen relativ zu dem Rückstellmodulgehäuse (33) drehbaren Drehfederelementträger (37) und eine gegenüber dem Rückstellmodulgehäuse (33) ortsfest angeordnete Drehfederelementbasis (38) umfasst, wobei das Drehfederelement (36) mit dem Drehfederelementträger (37) und der Drehfederelementbasis (38) zumindest wirkverbunden ist.

8. Steuervorrichtung (1) nach einem der Ansprüche 1 bis 7,
**dadurch gekennzeichnet, dass**
das Gehäusemodul (3) vier Durchgangsöffnungen (10) und vier Kupplungsbereiche (12, 13, 14, 15) umfassend jeweils eine Lagerstelle (10) aufweist, wobei sich die erste Drehachse (4) durch zwei gegenüberliegende Durchgangsöffnungen (10) und sich die zweite Drehachse (5) durch die zwei weiteren gegenüberliegenden Durchgangsöffnungen (10) erstreckt.

9. Steuervorrichtung (1) nach einem der Ansprüche 1 bis 8,
**dadurch gekennzeichnet, dass**
die erste Drehachse (4) und die zweite Drehachse (5) senkrecht zueinander sind.
